# EUROPEAN PATENT SPECIFICATION

(11) **EP 0 559 176 B1**
(45) Date of publication and mention of the grant of the patent: **29.05.1996**
(21) Application number: 93103398.9
(22) Date of filing: 03.03.1993
(51) Int. Cl.: B60K 1/04, H01M 2/10

(54) **Vehicle structure for electric vehicle**
Karosserie für ein Elektrofahrzeug
Carrosserie pour véhicule électrique

(30) Priority: 04.03.1992 JP 46596/92; 04.03.1992 JP 46704/92; 26.10.1992 JP 287784/92
(43) Date of publication of application: 08.09.1993
(73) Proprietor: TOYOTA JIDOSHA KABUSHIKI KAISHA, Aichi-ken (JP); KANTO JIDOSHA KOGYO KABUSHIKI KAISHA, Yokosuka-shi, Kanagawa-ken 237 (JP)
(72) Inventor: Harada, Junichi, Toyota-shi, Aichi-ken (JP); Tsuchida, Takuji, Toyota-shi, Aichi-ken (JP); Kunikita, Keiji, Yokosuka-shi, Kanagawa-ken (JP); Hasegawa, Katsuhisa, Toyota-shi, Aichi-ken (JP); Fuse, Tadahiko, Yokosuka-shi, Kanagawa-ken (JP); Suzuki, Tomoo, Zushi-shi, Kanagawa-ken (JP)
(74) Representative: Tiedtke, Harro, Dipl.-Ing.

(56) References cited:
- DE-A- 2 522 844
- DE-A- 3 141 164

## Description

The present invention relates to a vehicle structure which has a battery carrier for containing a battery disposed on a vehicle body thereof. More particularly, it relates to a battery-supporting structure for an electric vehicle.

Research and development has been carried out on electric cars as a way of providing a pollutant emission-free vehicle. Most of such electric cars use a battery in combination with either an alternating-current motor or a direct-current motor as a power source. The battery is usually accommodated in a battery carrier which is anchored to the underside of a vehicle body by means of bolts and the like. (Refer to Japanese Patent Application Laid-Open No. 60-146724.)

In order to reduce impact force due to a collision, a conventional automobile is designed to permit front-side members and the like to be deformed, thereby absorbing kinetic energy which would otherwise be transferred to the vehicle body thereof.

However, an electric vehicle having a battery has greater body weight than ordinary vehicles. Thus, absorption of kinetic energy requires a corresponding increase in the strength of the front-side members and the like, which further increases body weight.

To solve this problem, an electric vehicle which allows a battery carrier housing a battery to be separated from a vehicle body has been proposed when the vehicle comes into collision. (Refer to DE2522844A1) However, this type of the electric vehicle only drops the battery carrier to a road surface. It is not disclosed in the DE2522844A1 how to manage finally kinetic energy of the battery carrier.

Another type of electric vehicle has been proposed in which a battery, movably disposed on a crushable rear body of the vehicle, is connected thereto by means of a plurality of connecting means. The kinetic energy of the battery, which is caused by a collision of the vehicle, is thereby absorbed through crush of the rear body. (Refer to DE3141164A1.)

The rear body of this electric car, however, is fabricated to acquire relatively low strength because it is used as a means for absorbing the kinetic energy of the battery. Accordingly, the above strength of the rear body greatly differs from the strength of the rear body, which is required for absorbing impact loading due to a collision at the rear body. This means that this type of car may be an electric vehicle having a very particular rear body structure, which is designed to accommodate only an impact of a front body thereof, because it is very difficult to make the absorption of the kinetic energy of the battery compatible with the absorption of such impact loading. Accordingly, a rear body structure for coping with a bump of the rear body provides no control over the kinetic energy of the battery.

In view of the above-described fact, an object of the present invention is to provide an electric vehicle which allows for control, upon a collision of the vehicle, over additional kinetic energy acting on a vehicle body thereof, which corresponds to an increase in weight with a battery disposed in the vehicle.

This object is achieved by means of the combination of the features recited in claim 1. Preferable embodiments of the invention are defined in the subclaims.

In the body structure for the electric vehicle according to the present invention, the supporting mechanism supports the battery carrier having the battery therein at the underside of the vehicle body, while the movement-restricting means restricts movement of the battery carrier, which is usually made in a moving direction of the vehicle.

When a predetermined force of inertia is imparted to the battery carrier by a collision of the vehicle, the movement-restricting means releases restriction of movement of the battery carrier, thereby allowing the battery carrier to separate from the vehicle body. The energy transfer-control means then provides control over the transfer of kinetic energy from the separated battery carrier to the vehicle body.

In order to absorb the kinetic energy of the battery carrier, the energy transfer-control means is designed to permit the separated battery carrier from the vehicle body to strike against in-vehicle components that are supported by the vehicle body, after the in-vehicle components stop due to a collision with an impact object. This arrangement blocks the transfer of kinetic energy from the battery carrier to the vehicle body.

Furthermore, the in-vehicle components include: a motor section, which is disposed in front of the battery carrier in the forward direction of the vehicle body; and, a sub-frame, which is provided behind the motor section in the rearward direction thereof. The battery carrier is thereby allowed to move by a shorter distance, and what is more, no additional energy absorption accessories need be provided therein.

The motor section is further provided with a holding mechanism for supporting the sub-frame which may be deformed through the collision. Such a deformed sub-frame is thereby prevented from being driven underneath the motor-section that commonly has a spherical shape. Accordingly, the motor section and the sub-frame can jointly absorb the kinetic energy of the battery carrier.

Furthermore, the sub-frame is formed with a planar surface portion such that the battery carrier is held in contact therewith upon collision of the vehicle. This arrangement ensures that the kinetic energy of the battery carrier is conducted to the sub-frame without being transmitted to any other portions.

In addition, the battery carrier, which is to be struck against the in-vehicle components, is provided with an energy-absorbing mechanism therein. This energy-absorbing mechanism allows less impact force to be transmitted to the in-vehicle components, thereby minimizing damage of the battery carrier.

Furthermore, the kinetic energy of the battery carrier can be absorbed efficiently without loads applied to the vehicle body, when the energy transfer-control means comprises an energy-absorbing mechanism, which is adapted to absorb the kinetic energy of the battery carrier by permitting only a part of the kinetic energy of the battery carrier to be transmitted to the vehicle body after the battery carrier is moved by a limited distance through detachment from the vehicle body without kinetic energy thereof transmitted to the vehicle body, i.e., after the vehicle body is crushed to absorb kinetic energy of the vehicle body itself.

In addition, the above energy-absorbing mechanism comprises an energy-absorbing plate, which is fixed at one end to the vehicle body so as to absorb the kinetic energy of the battery carrier while being scraped and flexed by the battery carrier which is moving after being separated from the vehicle body. The energy-absorbing plate is further formed with a lower rigid portion, which substantially blocks the transfer of the kinetic energy from the battery carrier to the vehicle body during movement of the battery carrier by a limited distance. The battery carrier is thereby guided along the lower rigid portion of the energy-absorbing plate without any shift in movement of the battery carrier. The kinetic energy of the battery carrier is absorbed by a rigid portion of the energy-absorbing plate after movement of the battery carrier by a further limited distance.

Furthermore, the battery carrier may be supported by the movement-restricting means, so as to be movable in the forward direction of the vehicle body when a given inertial force is exerted on the vehicle. In addition, the energy transfer-control means may comprise: a flexible energy-absorbing plate, which is fixed at one end to the vehicle body; and, an energy-absorbing guide member, which is provided on the battery carrier so as to continuously flex the energy-absorbing plate while scraping thereagainst upon movement of the battery carrier in the forward direction of the vehicle body. In this arrangement, the movement-restricting means permits the battery carrier to move in the forward direction of the vehicle body when a given inertial force is imparted to the vehicle through the collision thereof.

Upon such forward movement of the battery carrier as described above, the energy-absorbing guide member, which is disposed on the battery carrier, continuously flexes the energy-absorbing plate, of which one end portion is fixed to the vehicle body, while scraping against the energy-absorbing plate. The kinetic energy of the battery carrier is thereby absorbed and consumed for continuous conversion into the energy of deforming the energy-absorbing plate.

In the following the invention is further illustrated by embodiments with reference to the enclosed figures
FIG. 1 is a perspective view, illustrating a state in which batteries and in-vehicle components for an vehicle structure in accordance with a first embodiment are mounted to the underside of a vehicle body thereof;
FIG. 2 is a perspective view, illustrating a battery carrier for the vehicle structure according to the first embodiment;
FIG. 3 is a partial cross-sectional view, showing a supporting structure for the battery carrier in accordance with the first embodiment;
FIG. 4 is a cross-sectional side view, showing the supporting structure for the battery carrier in accordance with the first embodiment;
FIG. 5 is a plan view, illustrating a positional relationship between a motor, a sub-frame, and the battery carrier according to the first embodiment immediately before the vehicle collides with a barrier;
FIG. 6 is a plan view, showing moved positions of the motor, the sub-frame, and the battery carrier for the vehicle structure according to the first embodiment after the vehicle stops through that collision with the barrier;
FIG. 7 is a side view, showing a positional relationship between the motor, the sub-frame, and the battery carrier for the vehicle structure according to the first embodiment immediately before the vehicle collides with the barrier;
FIG. 8 is a side view, showing moved positions of the motor, the sub-frame, and the battery carrier for the vehicle structure according to the first embodiment after the vehicle collides with the barrier;
FIG. 9 is a perspective view, illustrating a positional relationship between the motor, the sub-frame, and the battery carrier for the vehicle structure according to the first embodiment immediately before the vehicle collides with the barrier;
FIG. 10 is a perspective view, illustrating a rib member which is formed on a reduction gear for transferring driving force from the motor of the electric vehicle in accordance with the first embodiment;
FIG. 11 is a cross-sectional side view, showing a positional relationship between the sub-frame and the rib member that is formed on the reduction gear for transferring the driving force from the motor of the electric vehicle in accordance with the first embodiment;
FIG. 12 is a perspective view, illustrating a variant example of the rib member that is formed on the reduction gear for transferring the driving force from the motor of the electric vehicle in accordance with the first embodiment;
FIG. 13 is a perspective view, showing impact surface portions of the sub-frame and the battery carrier of the vehicle structure according to the first embodiment;
FIG. 14 is a perspective view, illustrating a positional relationship between a motor, a sub-frame, and a battery carrier of a vehicle structure in accordance with a second embodiment immediately before the vehicle collides with a barrier;
FIG. 15 is a perspective view, showing a positional relationship between a motor, a sub-frame, and a battery carrier of an electric vehicle in accordance with a variant example of the second embodiment immediately before the vehicle collides with the barrier;
FIG. 16 is a perspective view, showing a battery carrier for a vehicle structure in accordance with a third embodiment;
FIG. 17 is a partly perspective view, showing an energy-absorbing plate for the vehicle structure according to the third embodiment;
FIG. 18 is a detailed cross-sectional view, illustrating a deformed state of the energy-absorbing plate of the vehicle structure according the third embodiment;
FIG. 19 is a perspective view, illustrating a positional relationship between the motor and the battery carrier of the vehicle structure according to the third embodiment immediate before the vehicle collides with the barrier;
FIG. 20 is a graphic illustration, indicating a correlation between a free-running distance, relative movement amount, and in-vehicle energy-absorbing efficiency of the battery carrier of the vehicle structure according to the third embodiment;
FIG. 21 is a partial perspective view, illustrating an energy-absorbing plate of a vehicle structure according to a fourth embodiment;
FIG. 22 is a cross-sectional view, illustrating a mounted state of a battery-supporting structure of a vehicle structure according to a fifth embodiment;
FIG. 23 is a perspective view, illustrating a state in which the battery-supporting structure of the electric vehicle according to the fifth embodiment is employed so as to have batteries mounted to the underside of a vehicle body thereof;

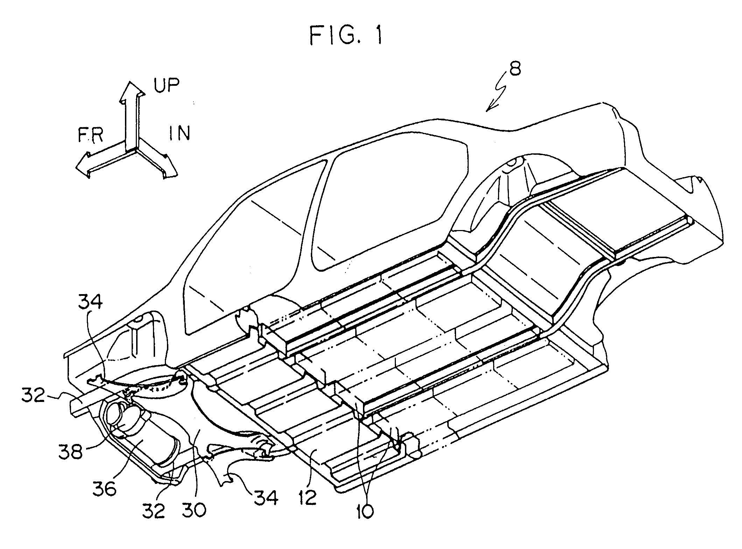

FIG. 1 illustrates a state in which a battery carrier 12 containing batteries 10 is fixed to the underside of a vehicle body 8 of a vehicle structure for an electric vehicle in accordance with a first embodiment. There is a sub-frame 30 in front of the battery carrier 12 in the forward direction of the vehicle. The sub-frame 30, which is spaced apart from a front surface portion of the battery carrier 12 by a predetermined distance, is anchored to a pair of front-side members 32, spanning therebetween. A pair of suspension arm members 34 are mounted at both end portions of the sub-frame 30 in order to restrict wheel movement. There is a motor section which is disposed in front of the sub-frame 30 in the forward direction of the vehicle. The motor section includes a motor 36 and a reduction gear 38 connected via an unillustrated motor mount so as to drive the vehicle.

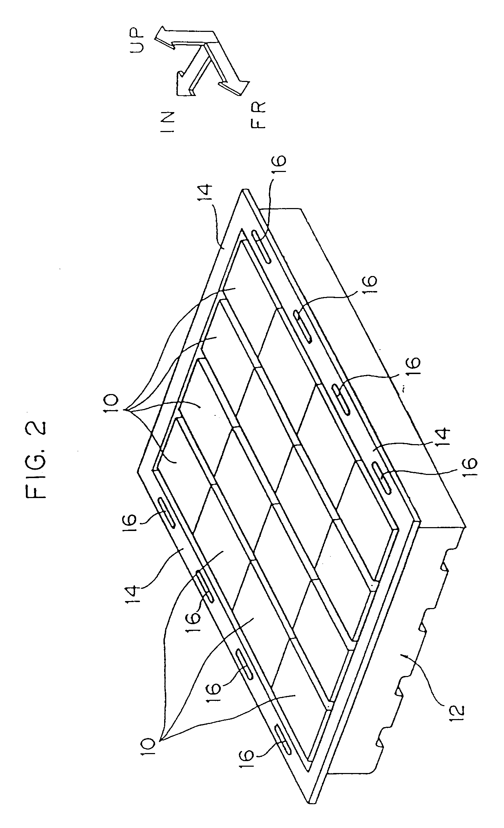

FIG. 2 illustrates the battery carrier 12, which is a rectangular-shaped box, with an upper portion thereof being open. Batteries 10, serving as a power source for the electric vehicle, are accommodated therein. The battery carrier 12 is formed with flange portions 14, which extend in the horizontal direction from the outer-periphery of the open portion of the battery carrier 12. The flange portion 14 is further formed with a plurality of elongated holes 16 in the sides which are in the transverse direction of the vehicle. The holes 16 are punched so as to extend in the longitudinal direction of the vehicle.

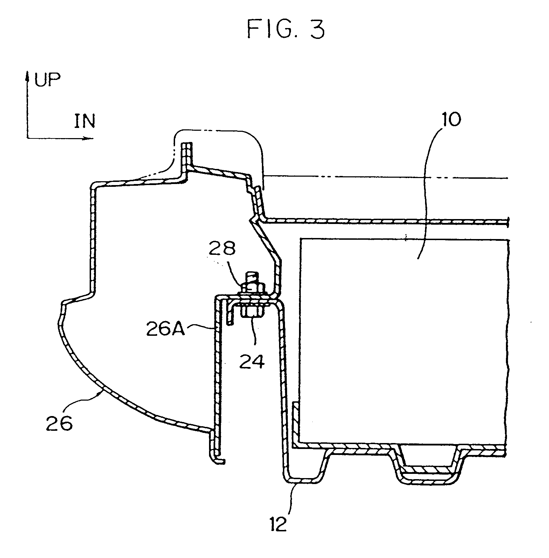

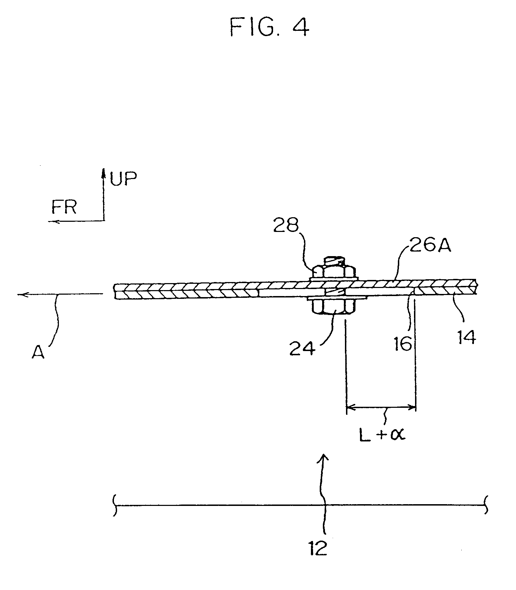

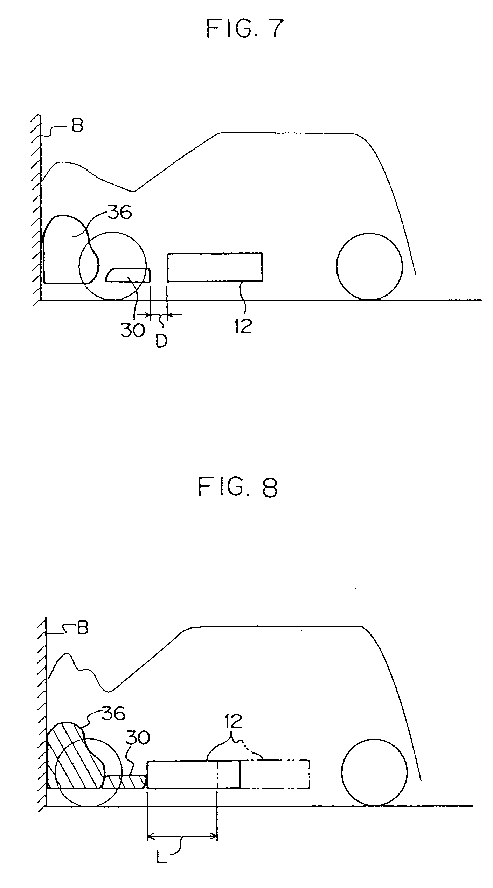

As shown in FIG. 3, a bolt 24 is provided through each elongate hole 16 from the underside of the flange portion 14. The bolt 24 is secured by a weld nut 28 which is welded to an inner plate 26A of a side sill 26. The battery carrier 12 is thus mounted to the side sill 26 by a given tightening force via the bolts 24 and the weld nuts 28. Furthermore, FIG. 4 depicts a hole length (L+α) of the elongate hole 16, which extends in the longitudinal direction of the vehicle. This hole length corresponds to a distance in which the battery carrier 12 is allowed to move, i.e., until the bolt 24 impinges on a rear edge portion of the elongate hole 16. This distance is established slightly greater in length than relative movement amount L of the battery carrier 12. As shown in FIGS. 7 and 8, this relative movement amount L is the amount in which the battery carrier 12 is allowed to move after a front collision of the electric vehicle with barrier B. That is, after the electric vehicle collides with barrier B, the battery carrier 12 dislodges from the vehicle body 8. The front surface portion of the battery carrier 12 then strikes against the sub-frame 30 which in turn bumps into and stops against the motor 36 or the reduction gear 38. Kinetic energy of the battery carrier 12 is thereby prevented from being transmitted to the vehicle body 8.

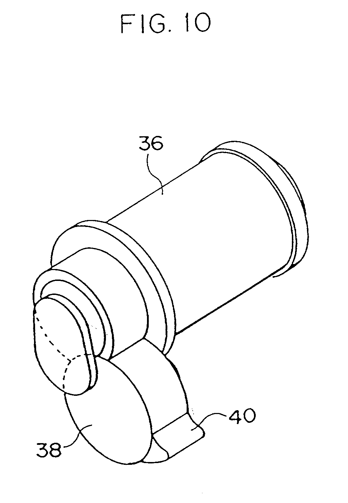

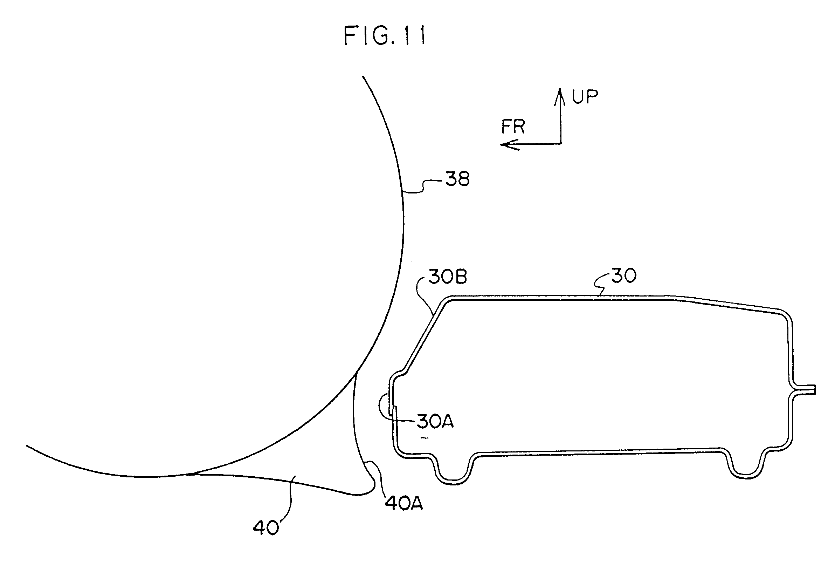

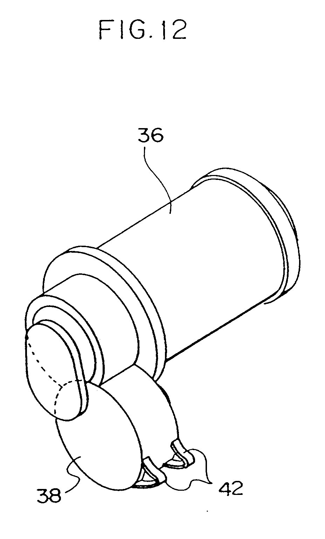

Referring now to FIG. 10, the cylindrical-shaped reduction gear 38 for transferring the driving force from the motor 36 is provided with a rib portion 40 at a lower side thereof, which extends outwardly from the outer-circumferential surface of the reduction gear 38. As shown in FIG. 11, the rib portion 40 is disposed so that one surface portion 40A of the rib portion 40, which is directed in the rearward direction of the vehicle body 8, lies coextensive horizontally with a vertical surface of a protuberance portion 30A of the sub-frame 30. This ensures that the sub-frame 30, which is forced to move toward the reduction gear 38 upon the collision of the vehicle, is held by the reduction gear 38, with a beveled surface 30B of the sub-frame 30 being guided along the outer-circumferential surface of the reduction gear 38. The sub-frame 30 is thereby prevented from being driven underneath the reduction gear 38. Alternatively, as illustrated in FIG. 12, the reduction gear 38 may be provided with a pair of rib portions 42, which project outwardly therefrom and spaced apart from each other by a predetermined distance so as to hold the protuberance portion 30A of the sub-frame 30 therebetween. Furthermore, the rib portion 40 or the pair of rib portions 42 may be provided on the body of the motor 36 instead of the reduction gear 38.

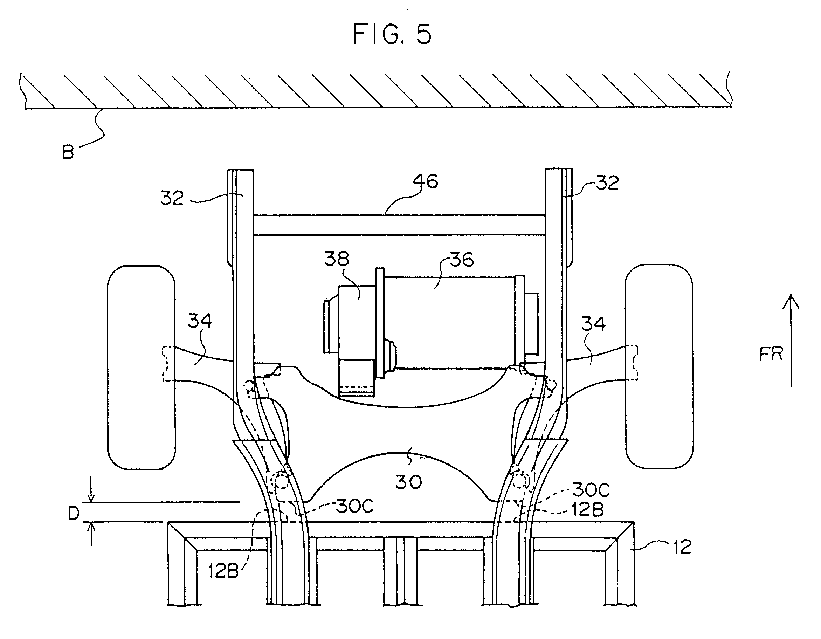

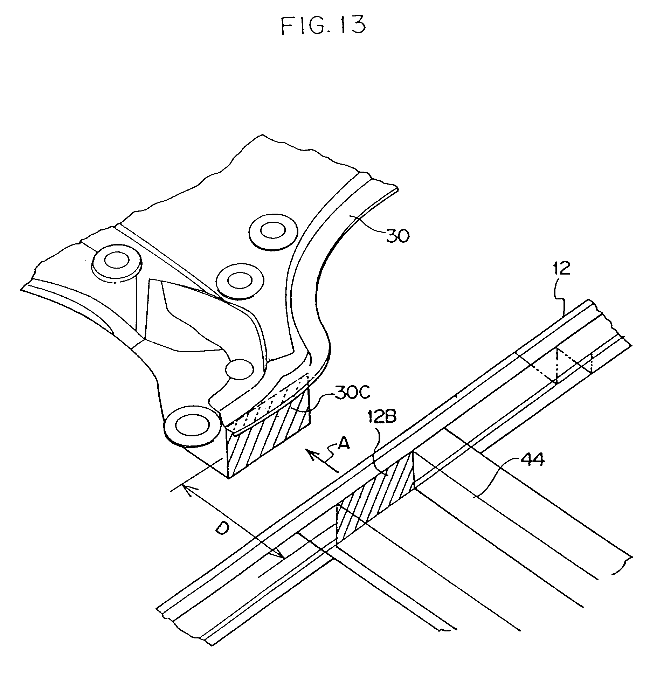

Referring now to FIGS. 5 and 13, the sub-frame 30 is formed with a pair of planar surface portions 30C facing in the rearward direction of the vehicle. In order to ensure that the kinetic energy of the battery carrier 12 is transmitted to the sub-frame 30, the sub-frame 30 is disposed such that the planar surface portions 30C strike against the front surface portions 12B of beam members 44 that constitute the battery carrier 12.

Next, it will be described how the kinetic energy of the battery carrier containing batteries is absorbed without being transmitted to the vehicle body upon a frontal collision of the electric vehicle according to the present invention.

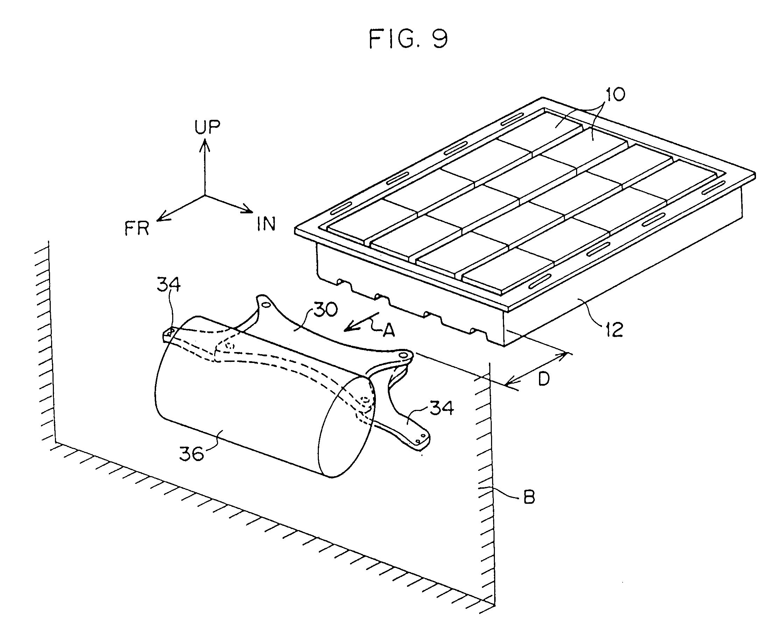

With reference to FIG. 9, upon a frontal collision of the vehicle, the battery carrier 12 is urged to move (in the direction of arrow A) by inertial force so as to consume kinetic energy thereof which had been sustained immediately before the collision.

Although the tightening force of the bolt 24 and the weld nut 28, as illustrated in FIG. 4, generates frictional force between the flange portion 14 of the battery carrier 12 and the side sill 26, the battery carrier 12 will slide when the above-noted kinetic energy exceeds such frictional force. With the bolts 24 still holding the battery carrier 12, the battery carrier 12 is thereby dislodged from a state of being secured to the vehicle body 8. While being guided by the elongate holes 16, the battery carrier 12 is forced to move in the forward direction of the vehicle body 8. At this stage, no kinetic energy is substantially transmitted from the battery carrier 12 to the vehicle body 8. Now, for convenience of description, a moving state of the battery carrier 12 with kinetic energy thereof retained therein, in which no kinetic energy is substantially conducted from the battery carrier 12 to the vehicle body 8, is herein defined as being in a free-running state.

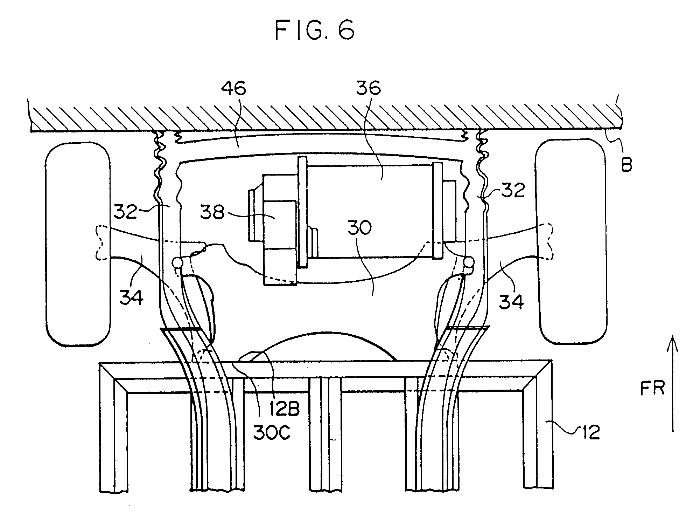

As illustrated in FIGS. 6 and 8, while the battery carrier 12 is in such a free-running state, the front-side members 32, a cross-member 46, and the like in the vehicle body 8, which is in collision with an impact object, for example, barrier B, are crushed so as to absorb kinetic energy of the vehicle body 8. (At this time, weight of the batteries 10 and the battery carrier 12 are not applied to the vehicle body 8.) The movement of the motor 36 and the reduction gear 38, which serve as in-vehicle components, stop by the collision with barrier B. The sub-frame 30 deforms and movement thereof is stopped by striking against the reduction gear 38. Note that the sub-frame 30 is held by the rib portion 40 that is provided on the reduction gear 38, so as not to be driven under the reduction gear 38. (See FIG. 10.)

The battery carrier 12 next strikes against the sub-frame 30, which remains collapsed against barrier B. As previously described, each elongated hole 16, formed in the battery carrier 12, has a hole length (L+α) which permits the battery carrier 12 to be in a free-running state until stopping by striking against the sub-frame 30. In addition, the hole length is larger in length than relative movement amount L, in which the battery carrier 12 is permitted to move until stopping by striking against the sub-frame 30. Accordingly, no interruption occurs during movement of the battery carrier 12, and no kinetic energy is transferred therefrom to the vehicle body 8. Furthermore, referring back to FIG. 6, when the battery carrier 12 bumps against the sub-frame 30, the front surface portions 12B of the beam members 44 of the battery carrier 12 strike against the pair of planar surface portions 30C of the sub-frame 30. The kinetic energy of the battery carrier 12 is thereby securely transmitted to the sub-frame 30 without dispersal.

In this way, the battery carrier 12, which is dislodged from the vehicle body 8 upon collision of the front body thereof, is held in a free-running state until being stopped by the crush of the vehicle body 8. Then, the kinetic energy of the battery carrier 12 is absorbed by the sub-frame 30 which stops by striking against barrier B. Accordingly, no kinetic energy is transmitted therefrom to the vehicle body 8. As a result, there is no need for increasing strength of the front-side members 32 and the like in order to absorb additional impact force acting on the vehicle body 8, which corresponds to an increase in body weight by the batteries 10 disposed in the vehicle. Consequently, a lighter-weight electric vehicle is achievable.

A second embodiment will now be described.

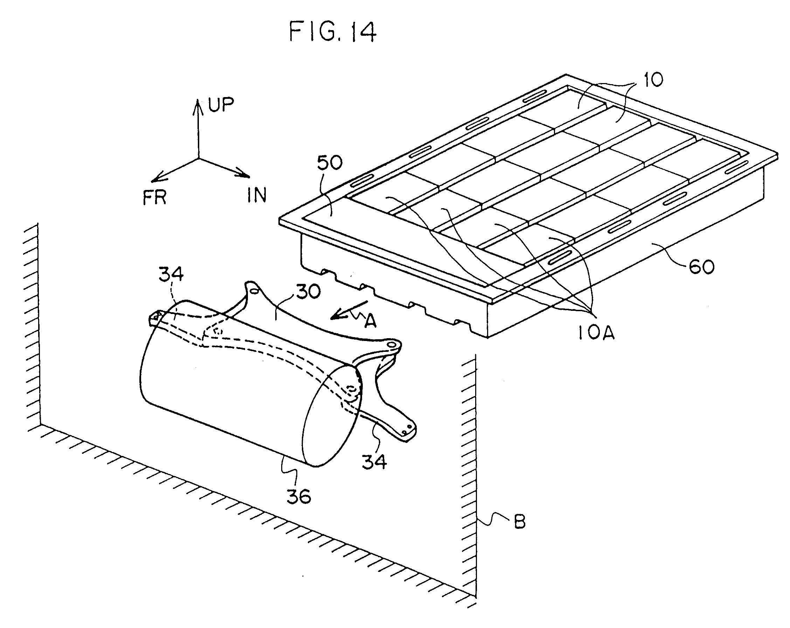

Referring to FIG. 14, a vehicle structure in accordance with the present embodiment is provided with an battery carrier 60, which has an urethane material 50, serving as an energy-absorbing means fitted into a front space portion of the battery carrier 60. Some of the kinetic energy of the battery carrier 60 is thereby absorbed by the battery carrier 60 itself, and not all being transmitted to a sub-frame 30, when the battery carrier 60 strikes against the sub-frame 30 which remains stopped by a collision, as described in the first embodiment. As a result, possible damage of the batteries 10 can be minimized. Note that the energy-absorbing means is not limited to the urethane material 50; alternatively, batteries 10A, which are arranged in the front row of the battery carrier 60, may be made of less rigid material so as to absorb the kinetic energy of the battery carrier 60.

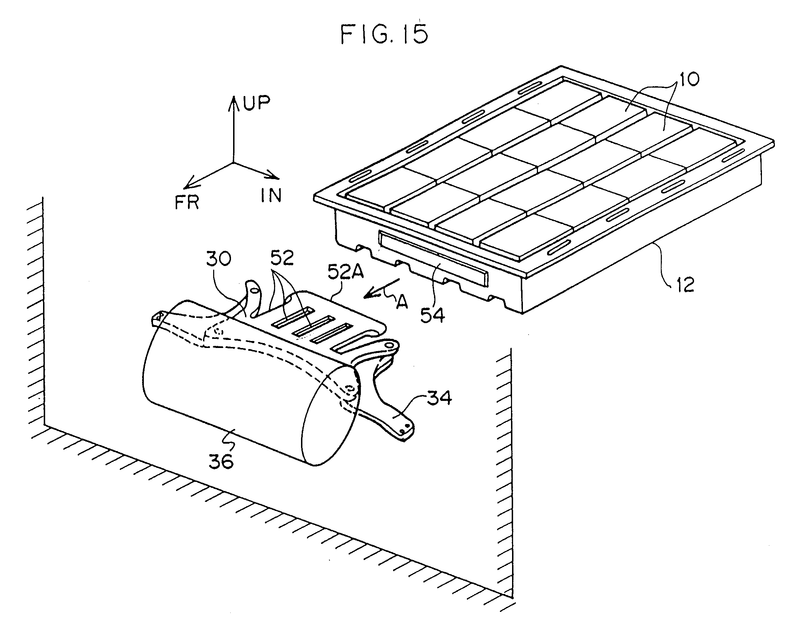

Furthermore, as shown in FIG. 15, the sub-frame 30 may be formed with cut-out portions 52 at a rear portion thereof so as to make that portion more pliable. The battery carrier 12 has an impact surface portion 54 which projects form a front surface portion of the battery carrier 12. At the time of a front-end collision of the electric vehicle, the forward movement of the sub-frame 30 is stopped, and the impact surface portion 54 of the free-running battery carrier 12 strikes against a rear edge portion 52A of the sub-frame 30 so as to further crush the sub-frame 30. The rear edge portion 52A of the sub-frame 30 thereby absorbs kinetic energy from the battery carrier 12.

Next, a third embodiment will be described.

According to the present embodiment, kinetic energy of a battery carrier 12, which is in a free-running state for a given period of time, is absorbed without allowing the battery carrier 12 to strike against a sub-frame 30, until a vehicle body 8 stops through a collision.

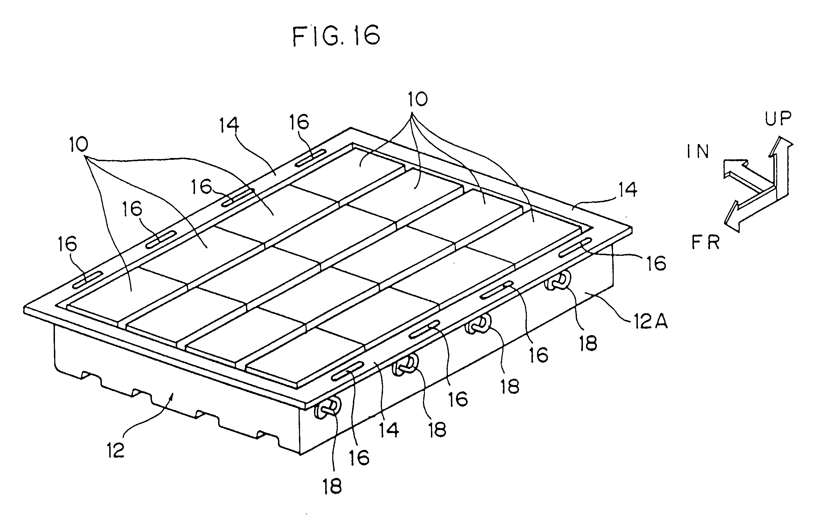

As illustrated in FIG. 16, the battery carrier 12 is provided with energy-absorbing guide members 18 on each side surface portion 12A thereof. Each of the energy-absorbing guide members 18 is made of a steel bar, which is folded to form a substantially U-shape. The energy-absorbing guide members 18 are fixed to a side surface portion 12A of the battery carrier 12 in such a way as to be positioned in front of end portions of elongate holes 16 in the forward direction of the vehicle body 8.

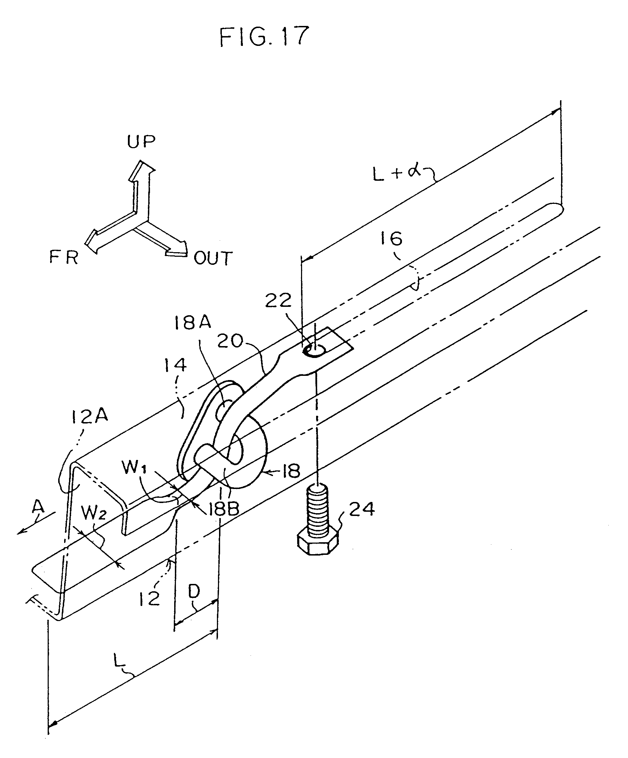

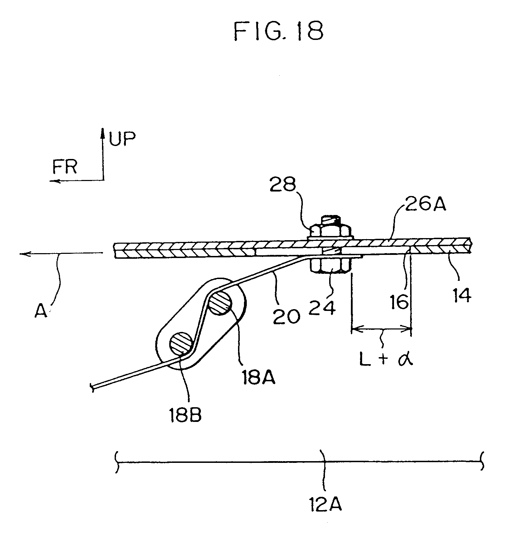

FIGS. 17 and 18 illustrate the energy-absorbing guide 18, which includes an upper-supporting portion 18A and a lower-supporting portion 18B, which are formed in parallel to each other The energy-absorbing guide member 18 is disposed so that the upper-supporting portion 18A is positioned behind the lower-supporting portion 18B in the rearward direction of the vehicle body 8. An energy-absorbing plate 20, which has small thickness, is provided through a gap between the upper-supporting and lower-supporting portions 18A and 18B of the energy-absorbing guide member 18, so as to be forced into contact with the outer-circumferential surface portions of the upper-supporting and lower-supporting portions 18A and 18B. The energy-absorbing plate 20, which is formed of a plastically deformable material, has a mounting hole 22 punched at an end surface portion thereof in the rearward of the vehicle body 8. A bolt 24 extends from the underside of the vehicle body 8 up through an elongate hole 16 and the mounting hole 22. The bolt 24 is secured by a weld nut 28 which is welded to an inner plate 26A of a side sill 26. The battery carrier 12 is thereby held to the side sill 26 by a predetermined tightening force by means of the bolt 24 and the weld nut 28, with the energy-absorbing plate 20 being anchored at one end to the side sill 26 by the bolt 24.

The energy-absorbing plate 20 has a lower rigid portion of smaller width W₁ and a rigid portion of larger width W₂. The lower rigid portion extends from the mounting hole 22 to a substantially intermediate portion of the energy-absorbing plate 20, while the rigid portion extends therefrom to a leading edge portion of the energy-absorbing plate 20. Free-running distance D, which will be described herein afterwards, is substantially equal to a length which extends from one position, at which this smaller width W₁ portion of the energy-absorbing plate 20 is forced into contact with the outer-circumferential surface portion of the lower-supporting portion 18B, to another position at which the narrow width W₁ portion turns to the above larger width W₂ portion. In addition, a length, which extends from the above-mentioned one position to the leading edge portion of the energy-absorbing plate 20, corresponds to relative movement amount L of the battery carrier 12.

Furthermore, the length (L+α) of the elongate hole 16 is set slightly longer than the relative movement amount L of the battery carrier 12, in order that the energy-absorbing plate 20 is allowed to absorb most part of the kinetic energy of the battery carrier 12 to avoid transferring the kinetic energy directly to the vehicle body 8.

It will now be described how the kinetic energy of the battery carrier having batteries disposed therein is absorbed without transmission to the vehicle body upon the collision of a front body of the electric vehicle according to the present embodiment.

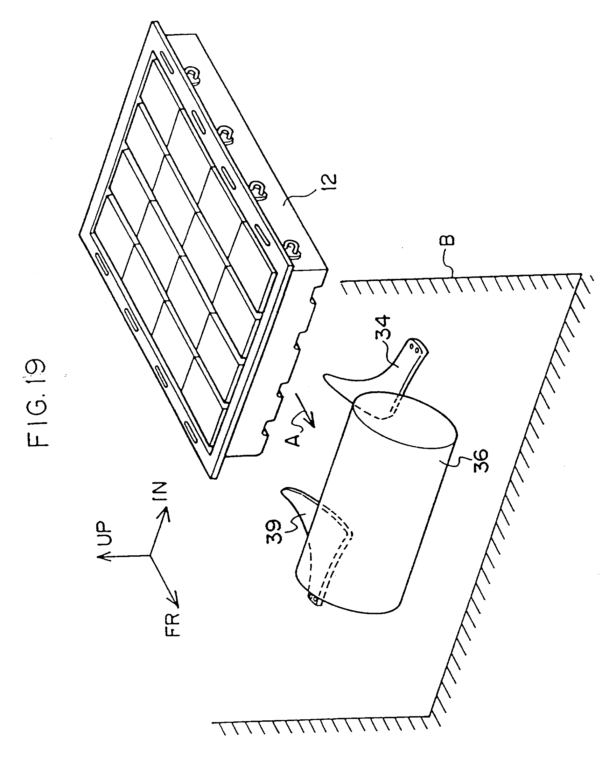

As illustrated in FIG. 19, when the front body of a vehicle without a sub-frame provided therein is in collision, the battery carrier 12 is urged into movement (in the direction of arrow A) by inertial force, so as to consume kinetic energy thereof which has been sustained immediately before the collision occurs.

The tightening force of the weld nut 28 and the bolt 24, as illustrated in FIG. 18, generates frictional force between a flange portion 14 of the battery carrier 12 and the side sill 26. However, the battery carrier 12 will slide when the kinetic energy of the battery carrier 12 exceeds the above frictional force. With the bolt 24 holding the battery carrier 12, the battery carrier 12 is thereby dislodged from a state of being secured to the vehicle body 8. While guided along the elongate holes 16, the battery carrier 12 is then forced to move in the forward direction of the vehicle body 8.

At this time, as illustrated in FIG. 17, the upper-supporting and lower-supporting portions 18A and 18B of the energy-absorbing guide member 18, which is provided on the side surface portion 12A of the battery carrier 12, scrape against the front side and reverse side portions of the energy-absorbing plate 20, one end portion of which is anchored to the side sill 26. However, little scraping and bending will occur at the narrow width W₁ portion, which causes the battery carrier 12 to be substantially in a free-running state. Thus, no kinetic energy is transferred from the battery carrier 12 to the vehicle body 8.

In this way, while the battery carrier 12 is in a free-running state, the vehicle body 8, which has collided with an impact object, for example, barrier B, is crushed to absorb kinetic energy of the vehicle body 8. (At this time, the weight of the batteries 10 and the battery carrier 12 are not applied to the vehicle body 8.)

When the battery carrier 12 is urged into further forward movement, both surface portions of the upper-supporting and lower-supporting portions 18A and 18B of the energy-absorbing guide member 18 scrape against the larger width W₂ portion of the energy-absorbing plate 20. This results in greater resistance to scraping and bending, thereby permitting the kinetic energy of the battery carrier 12 to be absorbed and consumed for conversion into the force of deforming the energy-absorbing plate 20. Accordingly, impact kinetic energy, which increases with an increase in weight due to the batteries 10 loaded in the vehicle, is prevented from being conducted to the vehicle body 8. As a result, no increase in strength of front-side members and the like is required, which allows for a lighter-weight electric vehicle.

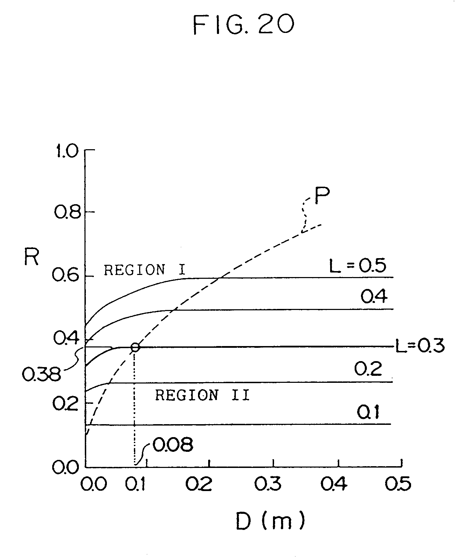

Next, one example of experimental results will be described with reference to the graph of FIG. 20, in order to determine how much the kinetic energy of the battery carrier 12 was absorbed with the above structure in accordance with the present embodiment.

Although "D(m)" in FIG. 20 indicates a free-running distance, it does not refer to a distance at which the battery carrier 12 is actually permitted to be held in a free-running state until kinetic energy thereof is absorbed. For convenience of experimentation, "D(m)" herein shows a distance at which the energy-absorbing guide member 18 scrapes against the smaller width W₁ portion of the energy-absorbing plate 20 before the kinetic energy of the battery carrier 12 is absorbed, as shown in FIG. 17.

"R" represents an in-vehicle energy absorption efficiency (A/E), indicating a value produced from absorbed kinetic energy amount A divided by kinetic energy E (1/2 x mv²: m = mass of the battery carrier and batteries; and, V = collision velocity), kinetic energy E being the kinetic energy that had been retained in the battery carrier 12 before collision occurred.

Furthermore, "L(m)" represents relative movement amount of the battery carrier 12 with respect to the vehicle body 8, in which the battery carrier 12 was moved after being released from a state of being secured to the vehicle body 8. (See FIG. 17.)

Region "I" shows a range in which the kinetic energy of the battery carrier 12 was absorbed through the deformation of the energy-absorbing plate 20 by the energy-absorbing guide member 18 of the battery carrier 12 after the vehicle body 8 stopped due to a collision with barrier B. Region "II" indicates a range in which the kinetic energy of the battery carrier 12 was absorbed through the deformation of the energy-absorbing plate 20 by the energy-absorbing guide member 18 of the battery carrier 12 after the vehicle body 8 collided with barrier B until the battery carrier 12 stopped. Thereafter, the vehicle body 8 came to a stop. Regions I and II are divided into two parts by curve P, as shown by a dashed line. This curve P represents a divergent point of economical cost. To be specific, in region II, inertial force of the battery carrier 12 increases with an increase in free-running distance D, thereby producing additional kinetic energy which acts on the vehicle body 8. Thus, an increase in strength of front-side members and the like is required for absorption of such additional kinetic energy. Referring to region I, in which in-vehicle energy-absorbing efficiency R decreases with a reduction in free-running distance D.

Thus, in view of energy absorption efficiency, weight, and cost, curve P indicates an optimum value of free-running distance D of the battery carrier 12 with respect to relative movement amount L.

Now, assuming that relative movement amount L of the battery carrier 12 is determined to be 0.30 meters, for example, with layout and the like of the vehicle body 8 taken into account, the optimum value of free-running distance D in view of in-vehicle energy absorption efficiency R, cost, and the like must be set at 0.08 meters according to curve P. That is, in view of cost, a correlation between in-vehicle energy absorption efficiency R, free-running distance D, and relative movement amount L of the battery carrier can be estimated to some extent.

Note that a means for holding the battery carrier 12 to the underside of the vehicle body 8 is not limited to the bolt 24 and the weld nut 28, but may include a resin capsule, which is fitted between the elongate hole 16 and an upper end portion of the bolt 24 so as to break away in flakes when a given inertial force is exerted thereon. That is, any alternative means, which is adapted to release restraint on movement of the battery carrier 12 with a given inertial force, is applicable without being limited to the present embodiment.

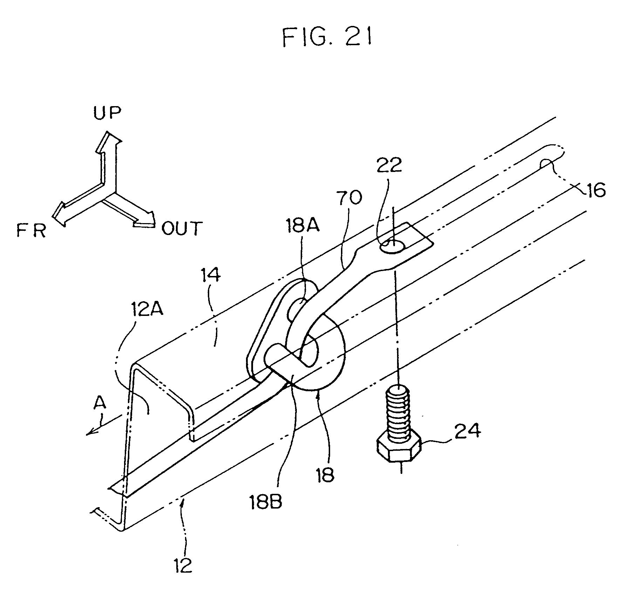

A fourth embodiment will now be described with reference to FIG. 21.

According to the present embodiment, a battery carrier 12 is provided with an energy-absorbing plate 70 for absorbing the kinetic energy thereof in a manner similar to the third embodiment.

The energy-absorbing plate 70 has a width which corresponds to somewhere between widths W₁ and W₂ of the energy-absorbing plate 20 according to the third embodiment. An energy-absorbing guide member 18, which is provided on a side surface portion 12A of the battery carrier 12, includes an upper-supporting portion 18A and a lower-supporting portion 18B. One end portion of the energy-absorbing plate 70 is fixed to a side sill. The upper-supporting and lower-supporting portions 18A and 18B are forced to move in the forward direction of the vehicle body 8 (in the direction of arrow A), while continuously flexing the energy-absorbing plate 70 by scraping against both side surface portions thereof. The kinetic energy of the battery carrier 12 is thereby absorbed and consumed for conversion into the force of deforming the energy-absorbing plate 70. As a result, impact kinetic energy, which increases with an increase in weight due to the batteries 10 loaded in the vehicle, can be absorbed by the energy-absorbing plate 70 for a short time, thereby minimizing the transfer of kinetic energy therefrom to the vehicle body 8.

A battery-supporting structure for an electric vehicle in accordance with a fifth embodiment will now be described.

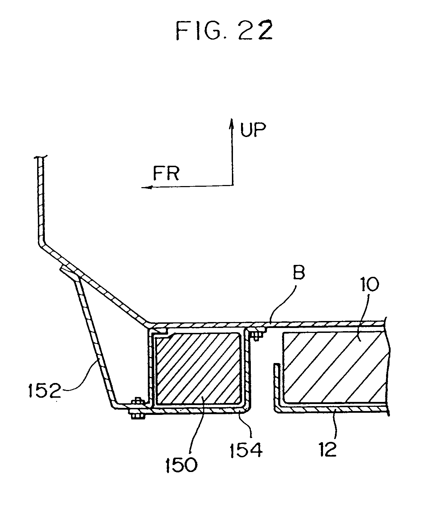

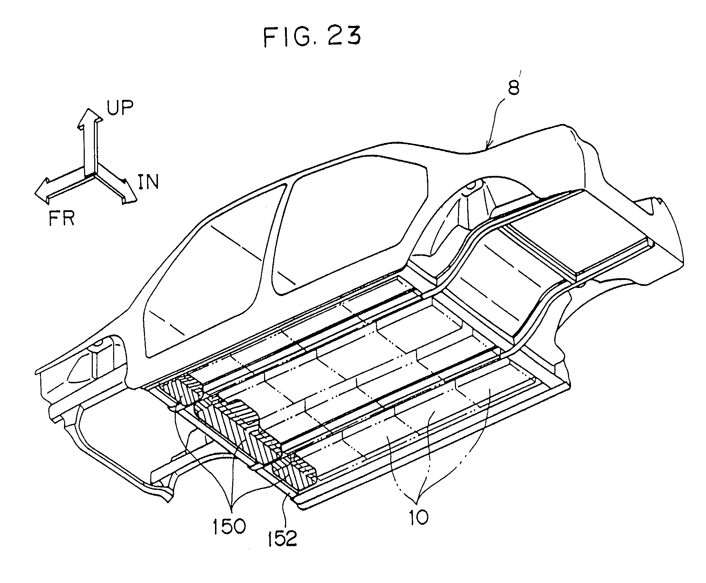

FIGS. 22 and 23 illustrate the present embodiment, in which the energy-absorbing plates 138 are replaced by energy-absorbing members 150, which are provided in front of a battery carrier 12 and spaced apart therefrom by a predetermined distance. The energy-absorbing member 150 is formed of a shock-absorbing member such as P.P. beads or urethane foam, which is molded into a substantial box-shape. The energy-absorbing member 150 is held by a L-shaped stop member 154 which is anchored to a body member 152 and the underside of the vehicle body 8. Similarly to the fifth embodiment, a supporting structure for the battery carrier 12 includes a support 120, a bracket 114, and a shear pin 128.

According to the present embodiment, when the battery carrier 12 breaks loose from the support 120 and moves in the forward direction of the vehicle body 8, the energy-absorbing member 150 is crushed to absorb the kinetic energy of the batteries 10.

## Claims

1. A vehicle structure for an electric vehicle,
comprising
a battery carrier (12, 60) for containing a battery (10) disposed on a vehicle body (8);
a supporting mechanism (24, 26, 28) supporting said battery carrier on said vehicle body;
movement-restricting means (16, 24, 28) for restricting movement of said battery carrier relative to said vehicle body, said movement-restricting means being operable by a collision of said vehicle to release said battery carrier for movement relative to said vehicle body;
battery carrier free-run means (16, 20, 24, 28) for allowing said battery carrier to run substantially free relative to said vehicle body for a predetermined distance after a collision of said vehicle structure; and
energy transfer-control means (30, 50, 52; 18; 20; 18; 70) for controlling a transfer of kinetic energy from said battery carrier to said vehicle body by absorbing kinetic energy of said battery carrier after said battery carrier free-runs for said predetermined distance.

2. A vehicle structure according to claim 1, further comprising a moving direction-restricting means (16), which allows movement of said battery carrier to be limited to a longitudinal direction of said vehicle body (8) upon collision of said vehicle structure.

3. A vehicle structure according to claim 1, wherein said energy transfer-control means (30, 50, 52) are in-vehicle components against which said battery carrier strikes after said in-vehicle components stop due to a collision with an impact object, said components being supported by said vehicle body (8).

4. A vehicle structure according to claim 3, wherein said in-vehicle components include a motor section (36, 38), and a sub-frame (30) which is provided behind said motor section in a rearward direction of said vehicle body.

5. A vehicle structure according to claim 4, wherein said motor section (36, 38) is provided with a holding mechanism (34) for supporting said sub-frame (30) which may be deformed through the collision.

6. A vehicle structure according to claim 4, wherein said sub-frame (30) is formed with a substantially planar surface portion such that said battery carrier is held in contact therewith.

7. A vehicle structure according to claim 3, wherein said battery carrier (12) to be struck against said in-vehicle components includes an energy-absorbing means (50).

8. A vehicle structure according to claim 3, wherein said sub-frame (30) and said battery carrier (12) are formed, respectively, with a pliable portion (52, 52A) in the rearward direction of said vehicle and a protuberance portion (54) in a forward direction thereof, such that said protuberance portion strikes against said pliable portion in order to absorb energy when said vehicle structure comes into collision.

9. A vehicle structure according to claim 1, wherein said energy transfer-control means comprises an energy-absorbing mechanism (18, 20; 18, 70) which absorbs the kinetic energy of said battery carrier (12) by permitting only a part of the kinetic energy of said battery carrier to be transferred to said vehicle body after said battery carrier is moved by a limited distance, without said kinetic energy being transferred to said vehicle body, through release from restriction of movement of said battery carrier applied by said movement-restricting means, with consequential release from a state in which said battery carrier remains secured to said vehicle body.

10. A vehicle structure according to claim 9, wherein said energy-absorbing mechanism (18, 20; 18; 70) comprises an energy-absorbing plate (20; 70) which is fixed at one end to said vehicle body so as to absorb the kinetic energy of said battery carrier (12) while being scraped and flexed by said battery carrier which is moving after being released from a state of being secured to said vehicle body, and wherein said energy-absorbing plate is formed with: a lower rigid portion, which substantially blocks the transfer of the kinetic energy from said battery carrier to said vehicle body during movement of said battery carrier by a limited distance; and, a rigid portion, which absorbs the kinetic energy thereof after movement of said battery carrier by a further limited distance.

11. A vehicle structure according to claim 1, wherein said battery carrier (12) is supported by said movement-restricting means (16, 24, 28) so as to be movable in the forward direction of said vehicle body when a given inertial force is exerted on said vehicle structure, and wherein said energy transfer-control means comprises (18, 20; 18; 70): a flexible energy-absorbing plate (20, 70), which is fixed at one end to said vehicle body (8); and, an energy-absorbing guide member (18), which is provided on said battery carrier, so as to continuously flex said energy-absorbing plate while scraping thereagainst upon movement of said battery carrier in the forward direction of said vehicle body.

12. A vehicle structure for an electric vehicle
comprising
a battery carrier (12) for containing a battery disposed on a vehicle body (8);
an interlocked member (120) anchored to said vehicle body; and
an interlocking member (114) provided on said battery carrier and connected to said interlocked member to restrict movement of said battery carrier relative to said vehicle body when said interlocked member is connected to said interlocking member,
said interlocked member including a free-run portion (122) for allowing said battery carrier to run substantially free relative to said vehicle body for a predetermined distance after a predetermined force is imparted to said interlocking member in a longitudinal direction of said vehicle structure; wherein
said interlocking member (114) and said interlocked member (120) are disconnectable from each other when said predetermined force is imparted to said interlocking member (114), in the longitudinal direction of said vehicle structure, thereby allowing said interlocking member (114) to move in said longitudinal direction.

13. A vehicle structure according to claim 12, wherein:
said interlocked member (120) is formed with a guide groove (122) which extends in said longitudinal direction of said vehicle structure,
said interlocking member (114) comprises a bracket which is adapted to be held against said guide groove;
and said movement-restricting means (128) comprising a shear pin.

14. A vehicle structure according to claim 12, wherein said energy transfer-control means comprises an energy-absorbing means provided on said vehicle body for absorbing said kinetic energy of said battery carrier while restricting movement of said battery carrier.

15. A vehicle structure according to claim 14, wherein said energy-absorbing means comprises energy-absorbing members (150) provided on said battery carrier in said longitudinal direction of said vehicle structure and spaced apart from each other by a predetermined distance.

## Patentansprüche

1. Fahrzeug-Aufbau für ein Elektrofahrzeug, umfassend
einen Batterie-Träger (12, 60), um eine Batterie (10) zu enthalten, die in einer Fahrzeug-Karosserie (8) angeordnet ist;
einen Stütz-Mechanismus (24, 26, 28), der den Batterie-Träger an der Fahrzeug-Karosserie hält;
Bewegungs-Beschränkungs-Mittel (16, 24, 28), um die Bewegung des Batterie-Trägers relativ zu der Fahrzeug-Karosserie zu beschränken, wobei die Bewegungs-Beschränkungs-Mittel dazu vorgesehen sind, durch eine Kollision des Fahrzeuges den Batterie-Träger zu einer Bewegung relativ zu der Fahrzeug-Karosserie freizugeben;
Batterie-Träger-Freilauf-Mittel (16, 20, 24, 28), um zu ermöglichen, daß der Batterie-Träger nach einem Zusammenstoß des Fahrzeug-Aufbaus für eine vorbestimmte Wegstrecke im wesentlichen frei relativ zu der Fahrzeug-Karosserie läuft; und
Energie-Übertragungs-Kontroll-Mittel (30, 50, 52; 18; 20; 18; 70) zur Kontrolle einer Übertragung von kinetische Energie von dem Batterie-Träger auf die Fahrzeug-Karosserie durch Aufnahme von kinetischer Energie von dem Batterie-Träger, nachdem der Batterie-Träger die vorbestimmte Wegstrecke frei gelaufen ist.

2. Fahrzeug-Aufbau nach Anspruch 1, weiters umfassend ein sich bewegendes Richtungs-Beschränkungs-Mittel (16), das es ermöglicht, daß die Bewegung des Batterie-Trägers bei einem Zusammenstoß des Fahrzeug-Aufbaus auf eine Längsrichtung der Fahrzeug-Karosserie (8) beschränkt wird,.

3. Fahrzeug-Aufbau nach Anspruch 1, wobei die Energie-Übertragungs-Kontroll-Mittel (30, 50, 52) Bauteile innerhalb des Fahrzeugs sind, die der Batterie-Träger trifft, nachdem die Bauteile innerhalb des Fahrzeuges zufolge eines Zusammenstoßes mit einem Aufprall-Gegenstand stoppen, wobei die Bauteile durch die Fahrzeug-Karosserie (8) gehalten werden.

4. Fahrzeug-Aufbau nach Anspruch 3, wobei die Bauteile innerhalb des Fahrzeuges einen Motor-Abschnitt (36, 38) und einen Hilfsrahmen (30) umfassen, der hinter dem Motor-Abschnitt in einer Rückwärtsrichtung der Fahrzeug-Karosserie vorgesehen ist.

5. Fahrzeug-Aufbau nach Anspruch 4, wobei der Motor-Abschnitt (36, 38) mit einem Halte-Mechanismus (34) versehen ist, um den Hilfsrahmen (30) zu tragen, der durch den Zusammenstoß verformt werden kann.

6. Fahrzeug-Aufbau nach Anspruch 4, wobei der Hilfsrahmen (30) mit einem im wesentlichen ebenen Flächen-Abschnitt gebildet ist, so daß der Batterie-Träger in Berührung mit ihm gehalten wird.

7. Fahrzeug-Aufbau nach Anspruch 3, wobei der Batterie-Träger (12), der dazu ausgebildet ist, gegen Bauteile im Inneren des Fahrzeugs zu schlagen, ein Energie-Aufnahme-Mittel (50) aufweist.

8. Fahrzeug-Aufbau nach Anspruch 3, wobei der Hilfsrahmen (30) und der Batterie-Träger (12) jeweils mit einem nachgiebigen Abschnitt (52, 52A) in der rückwärtigen Richtung des Fahrzeugs ausgebildet sind, sowie mit einem vorspringenden Abschnitt (54) in seiner vorderen Richtung, so daß der vorspringende Abschnitt gegen den nachgiebigen Abschnitt schlägt, um Energie aufzunehmen, wenn der Fahrzeug-Aufbau einem Zusammenstoß unterworfen ist.

9. Fahrzeug-Aufbau nach Anspruch 1, wobei das Energie-Übertragungs-Kontroll-Mittel einen Energie-Aufnahme-Mechanismus (18, 20; 18, 70) umfaßt, der die kinetische Energie des Batterie-Trägers (12) aufnimmt, indem die Übertragung nur eines kleinen Teils der kinetischen Energie des Batterie-Trägers (12) auf die Fahrzeug-Karosserie zugelassen wird, nachdem der Batterie-Träger um eine begrenzte Wegstrecke bewegt worden ist, ohne daß kinetische Energie auf die Fahrzeug-Karosserie übertragen worden ist, und zwar durch das Freigeben der Beschränkung der Bewegung des Batterie-Trägers, die von dem Bewegungs-Beschränkungs-Mittel ausgeübt wird, mit der daraus folgenden Freigabe von einem Zustand, in dem der Batterie-Träger an der Fahrzeug-Karosserie befestigt bleibt.

10. Fahrzeug-Aufbau nach Anspruch 9, wobei der Energie-Aufnahme-Mechanismus (18, 20; 18; 70) eine Energie-Aufnahme-Platte (20; 70) umfaßt, die an einem Ende an der Fahrzeug-Karosserie befestigt ist, um so die kinetische Energie des Batterie-Trägers (12) aufzunehmen, während der Batterie-Träger (12) an ihr reibt und sie durch ihn gebogen wird, der sich bewegt, nachdem er aus einem Zustand freigegeben worden ist, in dem er an der Fahrzeug-Karosserie befestigt ist, und wobei die Energie-Aufnahme-Platte ausgebildet ist mit: einem unteren starren Abschnitt, der im wesentlichen die Übertragung von kinetischer Energie von dem Batterie-Träger auf die Fahrzeug-Karosserie während der Bewegung des Batterie-Trägers um eine begrenzte Wegstrecke blockiert; und einem starren Abschnitt, der seine kinetische Energie nach der Bewegung des Batterie-Trägers um eine weitere begrenzte Wegstrecke aufnimmt.

11. Fahrzeug-Aufbau nach Anspruch 1, wobei der Batterie-Träger (12) durch das Bewegungs-Beschränkungs-Mittel (16, 24, 28) getragen wird, um so in der Vorwärts-Richtung der Fahrzeug-Karosserie beweglich zu sein, wenn eine gegebene Trägheitskraft auf den Fahrzeug-Aufbau ausgeübt wird, und wobei das Energie-Übertragungs-Kontroll-Mittel (18, 20; 18; 70) umfaßt: eine flexible Energie-Aufnahme-Platte (20, 70), die an einem Ende an der Fahrzeug-Karosserie (8) befestigt ist; und ein Energie-Aufnahme-Führungs-Glied (18), das an dem Batterie-Träger vorgesehen ist, um so die Energie-Aufnahme-Platte kontinuierlich zu biegen, während er an ihr reibt, und zwar während der Bewegung des Batterie-Trägers in der Vorwärts-Richtung der Fahrzeug-Karosserie.

12. Fahrzeug-Aufbau für ein Elektrofahrzeug, umfassend:
einen Batterie-Träger (12), um eine Batterie zu enthalten, die in einer Fahrzeug-Karosserie (8) angeordnet ist;
ein verriegeltes Glied (120), das an der Fahrzeug-Karosserie verankert ist; und
ein Verriegelungs-Glied (114), das an dem Batterie-Träger vorgesehen ist und das mit dem verriegelten Glied verbunden ist, um die Bewegung des Batterie-Trägers in Bezug auf die Fahrzeug-Karosserie zu beschränken, wenn das verriegelte Glied mit dem Verriegelungs-Glied verbunden ist,
wobei das verriegelte Glied einen Freilauf-Abschnitt (122) aufweist, um es zu ermöglichen, daß der Batterie-Träger im wesentlichen frei in Bezug auf die Fahrzeug-Karosserie läuft, und zwar eine vorbestimmte Wegstrecke, nachdem eine vorbestimmte Kraft auf das Verriegelungs-Glied in einer Längsrichtung des Fahrzeug-Aufbaus ausgeübt worden ist; wobei
das Verriegelungs-Glied (114) und das verriegelte Glied (120) von einander trennbar sind, wenn die vorbestimmte Kraft auf das Verriegelungs-Glied (114) in der Längsrichtung des Fahrzeug-Aufbaus ausgeübt wird, wodurch es ermöglicht wird, daß das sich Verriegelungs-Glied (114) in der Längsrichtung bewegt.

13. Fahrzeug-Aufbau nach Anspruch 12, wobei:
das verriegelte Glied (120) mit einer Führungs-Nut (122) ausgebildet ist, die sich in der Längsrichtung des Fahrzeug-Aufbaus erstreckt;
das Verriegelungs-Glied (114) eine Halterung umfaßt, die dazu ausgebildet ist, gegen die Führungs-Nut gehalten zu werden;
und das Bewegungs-Beschränkungs-Mittel (128) einen Scher-Stift umfaßt.

14. Fahrzeug-Aufbau nach Anspruch 12, wobei das Energie-Übertragungs-Kontroll-Mittel einen Energie-Aufnahme-Mechanismus umfaßt, der auf der Fahrzeug-Karosserie vorgesehen ist, um die kinetische Energie des Batterie-Trägers aufzunehmen, während er die Bewegung des Batterie-Trägers beschränkt.

15. Fahrzeug-Aufbau nach Anspruch 14, wobei das Energie-Aufnahme-Mittel Energie-Aufnahme-Glieder (150) umfaßt, die auf dem Batterie-Träger in der Längsrichtung des Fahrzeug-Aufbaus vorgesehen sind und die von einander um einen vorbestimmten Abstand entfernt angeordnet sind.

## Revendications

1. Une structure de véhicule pour un véhicule électrique, comprenant
un porte-batterie (12, 60) pour recevoir une batterie (10) disposée sur une caisse de véhicule (8);
un mécanisme de support (24, 26, 28) supportant ledit porte-batterie sur ladite caisse de véhicule,
des moyens de limitation de déplacement (16, 24, 28) pour limiter le déplacement dudit porte-batterie par rapport à ladite caisse de véhicule, lesdits moyens de limitation de déplacement pouvant être actionnés par une collision dudit véhicule, pour libérer ledit porte-batterie pour qu'il se déplace par rapport à ladite caisse de véhicule,
des moyens de déplacement par inertie du porte-batterie (16, 20, 24, 28) pour permettre audit porte-batterie de se déplacer de façon sensiblement libre par rapport à ladite caisse du véhicule sur une distance prédéterminée après une collision de ladite structure de véhicule, et
des moyens de contrôle ou de régulation de transfert d'énergie (30, 50, 52; 18; 20; 18; 70) pour réguler le transfert d'énergie cinétique à partir dudit porte-batterie vers ladite caisse de véhicule en absorbant l'énergie cinétique dudit porte-batterie après le déplacement par inertie dudit porte-batterie sur ladite distance prédéterminée.

2. Une structure de véhicule selon la revendication 1, comprenant en outre des moyens de limitation de direction de déplacement (16), qui permettant de limiter le déplacement dudit porte-batterie à une direction longitudinale de ladite caisse de véhicule (8) lors d'une collision de ladite structure de véhicule.

3. Une structure de véhicule selon la revendication 1, dans laquelle lesdits moyens de contrôle ou de régulation de transfert d'énergie (30, 50, 52) sont des éléments internes du véhicule contre lesquels ledit porte-batterie vient heurter après l'arrêt desdits éléments internes du véhicule à la suite d'une collision sur un obstacle ou objet d'impact, lesdits éléments étant supportés par ladite caisse de véhicule (8).

4. Une structure de véhicule selon la revendication 3, dans laquelle lesdits éléments internes du véhicule comprennent une partie moteur (36, 38), et un châssis secondaire (30) prévu derrière ladite partie moteur, dans une direction arrière de ladite caisse de véhicule.

5. Une structure de véhicule selon la revendication 4, dans laquelle ladite partie moteur (36, 38) est pourvue d'un mécanisme de maintien (34) pour supporter ledit châssis secondaire (30) qui peut être déformé par la collision.

6. Une structure de véhicule selon la revendication 4, dans laquelle ledit châssis secondaire (30) est formé par une partie de surface sensiblement plane de manière que ledit porte-batterie soit maintenu en contact avec celui-ci.

7. Une structure de véhicule selon la revendication 3, dans laquelle ledit porte-batterie (12) susceptible de venir heurter lesdits éléments internes du véhicule comprend des moyens d'absorption d'énergie (50).

8. Une structure de véhicule selon la revendication 3, dans laquelle ledit châssis secondaire (30) et ledit porte-batterie (12) sont formés, respectivement, par une partie pliable (52, 52A) dans la direction arrière dudit véhicule et par une partie en saillie (54) dans la direction avant de celui-ci, de manière que ladite partie en saillie heurte ladite partie pliable pour absorber l'énergie lorsque ladite structure de véhicule entre en collision.

9. Une structure de véhicule selon la revendication 1, dans laquelle lesdits moyens de contrôle ou de régulation de transfert d'énergie comprennent un mécanisme d'absorption d'énergie (18, 20; 18, 70) qui absorbe l'énergie cinétique dudit porte-batterie (12) en permettant qu'une partie seulement de l'énergie cinétique dudit porte-batterie soit transférée à ladite caisse de véhicule après que ledit porte-batterie a été déplacé d'une distance limitée, sans que ladite énergie cinétique soit transférée à ladite caisse de véhicule, par la suppression de la limitation du déplacement dudit porte-batterie appliquée par lesdits moyens de limitation de déplacement avec, en conséquence, la suppression d'un état dans lequel ledit porte-batterie reste fixé à ladite caisse de véhicule.

10. Une structure de véhicule selon la revendication 9, dans laquelle ledit mécanisme d'absorption d'énergie (18, 20; 18, 70) comprend une plaque d'absorption d'énergie (20; 70) qui est fixée à une extrémité à ladite caisse de véhicule, de manière à absorber l'énergie cinétique dudit porte-batterie (12) tout en étant soumise au frottement et au fléchissement par ledit porte-batterie qui est déplacé après avoir été libéré de son état de fixation à ladite caisse de véhicule, et dans laquelle ladite plaque d'absorption d'énergie comprend: une partie inférieure rigide qui interrompt sensiblement le transfert d'énergie cinétique dudit porte-batterie à ladite caisse de véhicule lors du déplacement dudit porte-batterie sur une distance limitée; et une partie rigide qui absorbe l'énergie cinétique du porte-batterie après le déplacement dudit porte-batterie d'une distance limitée supplémentaire.

11. Une structure de véhicule selon la revendication 1, dans laquelle ledit porte-batterie (12) est supporté par lesdits moyens de limitation de déplacement (16, 24, 28) de manière à être mobile dans la direction avant de ladite caisse de véhicule lorsqu'une force d'inertie donnée est exercée sur ladite structure de véhicule, et dans laquelle lesdits moyens de contrôle ou de régulation de transfert d'énergie (18, 20; 18; 70) comprennent : une plaque flexible d'absorption d'énergie (20, 70) qui est fixée à une extrémité sur ladite caisse de véhicule (8); et un organe de guidage d'absorption d'énergie (18) qui est prévu sur ledit porte-batterie, de manière à déformer par flexion de façon continue ladite plaque d'absorption d'énergie tout en frottant contre celle-ci lors du déplacement dudit porte-batterie dans la direction avant de ladite caisse de véhicule.

12. Une structure de véhicule pour un véhicule électrique comprenant:
un porte-batterie (12) pour contenir une batterie, disposé sur une caisse de véhicule (8);
un organe interverrouillé (120) fixé sur ladite caisse de véhicule; et
un organe d'interverrouillage (114) prévu sur ledit porte-batterie et relié audit organe interverrouillé pour limiter le déplacement dudit porte-batterie par rapport à ladite caisse de véhicule quand ledit organe interverrouillé est relié audit organe d'inter-verrouillage,
ledit élément interverrouillé comprenant une partie à déplacement libre (122) pour permettre audit porte-batterie de se déplacer de façon sensiblement libre par rapport à ladite caisse de véhicule d'une distance prédéterminée après qu'une force prédéterminée ait été appliquée audit organe d'interverrouillage dans la direction longitudinale de ladite structure de véhicule; de manière que
ledit organe d'interverrouillage (14) et ledit organe interverrouillé soient susceptibles de se déconnecter l'un de l'autre lorsque ladite force prédéterminée est appliquée audit organe d'interverrouillage (114) dans la direction longitudinale de ladite structure de véhicule, de manière à permettre audit organe d'interverrouillage (114) de se déplacer dans ladite direction longitudinale.

13. Une structure de véhicule selon la revendication 12, dans laquelle:
ledit organe interverrouillé (120) est pourvu d'une rainure de guidage (122) qui s'étend dans ladite direction longitudinale de ladite structure de véhicule,
ledit organe d'interverrouillage (114) comprend un support qui est susceptible d'être maintenue contre ladite rainure de guidage;
et lesdits moyens de limitation de déplacement (128) comprennent un goujon de cisaillement.

14. Une structure de véhicule selon la revendication 12, dans laquelle lesdits moyens de contrôle ou de régulation de transfert d'énergie comprennent des moyens d'absorption d'énergie prévus sur ladite caisse de véhicule pour absorber ladite énergie cinétique dudit porte-batterie tout en limitant le déplacement dudit porte-batterie.

15. Une structure de véhicule selon la revendication 14, dans laquelle lesdits moyens d'absorption d'énergie comprennent des éléments d'absorption d'énergie (150) prévus sur ledit porte-batterie dans ladite direction longitudinale de ladite structure de véhicule et espacés, l'un par rapport à l'autre, d'une distance prédéterminée.
